# EUROPÄISCHE PATENTSCHRIFT

(11) **EP 1 538 179 B1**
(45) Veröffentlichungstag und Bekanntmachung des Hinweises auf die Patenterteilung: **19.09.2007**
(21) Anmeldenummer: 04106134.2
(22) Anmeldetag: 29.11.2004
(51) Int. Cl.: C08L 21/00, C08L 23/16, B60S 1/38

(54) **Gummimaterial und Verfahren zur Herstellung desselben**
Rubber material and process for preparing the same
Matériau de caoutchouc et méthode pour son fabrication

(30) Priorität: 05.12.2003 DE 10356933
(43) Veröffentlichungstag der Anmeldung: 08.06.2005
(73) Patentinhaber: ROBERT BOSCH GMBH, 70442 Stuttgart (DE)
(72) Erfinder: Geilenkirchen, Robert, B-4624, Fleron (Liege) (BE)

(56) Entgegenhaltungen:
- EP-A- 0 344 380
- EP-A- 0 446 382
- EP-A- 0 718 362
- EP-A- 1 186 631
- EP-A- 1 186 797
- WO-A-00/26296
- US-A- 4 843 128
- US-A- 5 710 218
- US-A- 6 040 351
- US-A1- 2002 016 415
- US-A1- 2003 134 983
- US-A1- 2003 162 926
- US-B1- 6 195 833

## Beschreibung

Die Erfindung betrifft ein Gummimaterial insbesondere für Wischblätter von Scheibenwischern oder für Kraftfahrzeugreifen, und ein Verfahren zu dessen Herstellung sowie dessen Verwendung nach dem Oberbegriff der unabhängigen Ansprüche.

### Stand der Technik

Bei Scheibenwischblättern ist es wichtig, dass sie sich der Kontur der Scheibe eines Kraftfahrzeugs möglichst gut anpassen können und auch bei unterschiedlichen Temperaturen flexibel bleiben. Daher werden Wischblätter in der Regel aus Elastomerprofilen gefertigt, wobei im Wesentlichen Gummimaterialien wie Naturkautschuk oder synthetische Kautschuksorten wie Chloroprenkautschuk oder EPDM verwendet werden. Daneben sind auch Wischblätter aus Silikonkautschuk oder Polyurethankautschuk bekannt.

Ein derartiges Wischblatt ist beispielsweise in der DE 35 27 093 C2 beschrieben. Dieses Wischblatt umfasst ein Basisteil, das die Halterung des Wischblatts in einem Metallbügel ermöglicht sowie ein Schwenkteil, dass über ein Halsteil mit dem Basisteil verbunden ist und das an seiner einer zu wischenden Glasfläche zugewandten Seite einen Lippenbereich aufweist. Das Basis-, Schwenk- und Halsteil sind aus einer Gummimatrix geformt, welche zumindest überwiegend aus EPDM besteht. Das Wischblatt wird durch ein Coextrusionsverfahren hergestellt; dabei können jedoch in der Praxis Probleme mit der Formbeständigkeit der bei der Extrusion erzeugten Wischgummiprofile auftreten. Eine wesentliche Rolle spielt dabei die Konsistenz des dem Extruder zugeführten Rohgummimaterials.

Weiterhin sind aus der EP 0 344 380 A2, der EP 0 446 382 A1, der US 4,843,128, der US 2003/0162926 A1, der EP 0 718 362 A1, der US 2003/0134983, der EP 1186 631 A1, der US 2002/0016415 A1, der US 5,710,218, der WO 00/26296 und der US 6,040,351 Gummimaterialien zu entnehmen, die eine Mischung zweier Gummifraktionen aufweisen, wobei sich die Gummifraktionen hinsichtlich ihrer Viskosität unterscheiden. Darüber hinaus ist aus der EP 1 186 797 A2 ein Gummiband für Transportsysteme bekannt, das ein Gummimaterial umfasst, das Gummifraktionen unterschiedlicher Viskosität aufweist. Weiterhin ist aus der US 6,195,833 B1 ein Wischerblatt bekannt, das aus unterschiedlichen Gummimaterialien gefertigt ist.

Aufgabe der vorliegenden Erfindung ist es, ein Gummimaterial und ein Verfahren zu dessen Herstellung bereitzustellen, das die Erzeugung formstabiler Profile ermöglicht.

### Vorteile der Erfindung

Das erfindungsgemäße Gummimaterial bzw. das Verfahren zu dessen Herstellung gemäß den kennzeichnenden Merkmalen der unabhängigen Ansprüche hat gegenüber dem Stand der Technik den Vorteil, dass ein für die Fertigung von Wischblättern bzw. Fahrzeugreifen geeignetes Gummimaterial mit einem günstigen Eigenschaftsprofil verfügbar ist, das gut reproduzierbar und somit kostengünstig hergestellt werden kann. Dies wird erreicht, indem im Gummimaterial zwei Fraktionen derselben Gummisorte enthalten sind, die sich hinsichtlich ihrer Viskosität im unvulkanisierten Zustand unterscheiden.

Die Mengenverhältnisse der beiden Fraktionen werden so gewählt, dass eine für die Verarbeitung des Gummimaterials günstige Gesamtviskosität des Rohgummimaterials resultiert. Die Gesamtviskosität des Rohgummimaterials hat einen wesentlichen Einfluss beispielsweise auf das Quellverhalten des Materials bei der Extrusion und ist somit eine Voraussetzung für eine ausreichende Formstabilität der erzeugten Gummiprofile.

Vorteilhafte Weiterbildungen der Erfindung ergeben sich aus den in den Unteransprüchen genannten Maßnahmen.

So ist vorteilhaft, wenn das Gummimaterial weiterhin ein Homogenisierungsmittel beispielsweise in Form eines organischen Harzes enthält, sodass das Gummimaterial im Rohzustand eine stabile Mischung der beiden Gummifraktionen sowie der weiteren im Gummimaterial enthaltenen Substanzen bildet.

Vorteilhaft ist weiter, wenn das Gummimaterial als Füllstoff insbesondere eine Mischung von Ofen- und Thermalruß enthält, da die Mischung der beiden Rußsorten einen höheren Füllgrad des Gummimaterials gestattet als die alleinige Verwendung einer einzigen Rußsorte, ohne dass sich die mechanischen Eigenschaften des Gummimaterials im ausgehärteten Zustand beispielsweise hinsichtlich seiner Härte verschlechtern.

In einer besonders bevorzugten Ausführungsform enthält das Gummimaterial kein Kalziumoxid oder -hydroxid. Kalziumoxid wird üblicherweise Gummimaterialien während der Verarbeitung insbesondere als Trocknungsmittel zugesetzt, es verschlechtert jedoch die mechanischen Eigenschaften des resultierenden Gummimaterials und führt aufgrund seiner geringen Vermischbarkeit mit der Gummimatrix des Gummimaterials zu einer unregelmäßigen Oberfläche eines entsprechenden Gummiprofils.

### Zeichnung

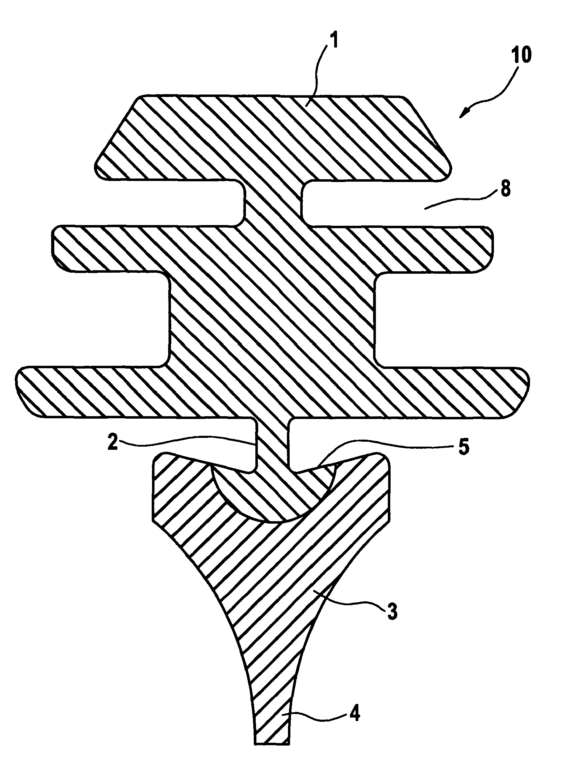

Ein Ausführungsbeispiel der Erfindung ist in der Zeichnung dargestellt und in der nachfolgenden Beschreibung näher erläutert. Es zeigt Figur 1 einen Querschnitt durch ein erfindungsgemäßes Wischblatt mit einer außenliegenden Federschiene.

### Ausführungsbeispiel

In Figur 1 ist ein Wischblatt 10 gemäß einem ersten Ausführungsbeispiel der vorliegenden Erfindung dargestellt. Das Wischblatt weist eine im wesentlichen streifenförmige Ausgestaltung auf. Es umfasst ein verbreitertes Kopfteil 1, das über einen Umlegesteg 2 mit einem Keil 3 verbunden ist. Das Kopfteil 1 weist Aussparungen 8 für die Aufnahme einer nicht dargestellten außenliegenden Federschiene auf. Der Keil 3 verjüngt sich an seiner dem Kopfteil 1 gegenüberliegenden und der zu reinigenden Glasfläche zugewandten Seite zu einer Wischlippe 4.

Das Kopfteil 1 bzw. der Umlegesteg 2 sind vorzugsweise aus EPDM (Ethylen-Propylen-Dien-Terpolymer), EPR (Ethylen-Propylen-Copolymer), CR (Chloropren), NR (Naturkautschuk), BR (Polybutadien), SBR (Styrol-Butadien-Gummi) oder IR (Polyisopren) bzw. Mischungen derselben gefertigt. Der Keil 3 ist vorzugsweise ebenfalls aus den genannten Materialien ausgeführt, er weicht jedoch hinsichtlich seiner Materialzusammensetzung von derjenigen des Kopfteils 1 ab. Zur besseren Verankerung des Umlegestegs 2 im Keil 3 ist ein dem Umlegesteg 2 benachbarter Bereich 5 des Keils 3 aus dem Material des Umlegestegs 2 gefertigt.

Das Gummimaterial enthält von mindestens einer der genannten Gummisorten EPDM, EPR, CR, BR, NR, SBR oder IR zwei Fraktionen, die zwar der gleichen Gummisorte zuzuordnen sind, sich jedoch in ihrer Viskosität im unvulkanisierten Zustand unterscheiden. So kann das Gummimaterial beispielsweise eine Fraktion EPDM 1 mit einer ersten Mooney-Viskosität (bei 125°C) von beispielsweise 20 bis 95 Mooney, vorzugsweise von 20 bis 50 Mooney enthalten und eine Fraktion EPDM 2 mit einer zweiten Mooney-Viskosität von beispielsweise 20 bis 95 Mooney, vorzugsweise von 50 bis 95 Mooney. Die Mengenverhältnisse der beiden Fraktionen EPDM 1 und EPDM 2 werden so gewählt, dass die Gesamtviskosität des Rohgummimaterials in einem Bereich von vorzugsweise 30 bis 60 Mooney angesiedelt ist und somit eine optimale Verarbeitung des Rohgummimaterials gewährleistet ist.

Die unterschiedlichen Viskositäten der Fraktionen EPDM 1 und EPDM 2 können beispielsweise durch entsprechende, in den Fraktionen enthaltene Zusatzstoffe bedingt sein oder aber durch eine entsprechende Wahl der Mengenverhältnisse der dem Terpolymer EPDM zu Grunde liegenden Monomere Ethylen, Propylen bzw. des Diens. Eine weitere Möglichkeit zur Steuerung der Viskosität besteht in der Variation des dem EPDM zu Grunde liegenden Diens.

Weiterhin führt eine Erhöhung des Ethylenanteils im EPDM zu einer Verbesserung der Extrudierbarkeit des Rohgummimaterials, wohingegen eine Erhöhung des Propylenanteils die Elastizität des resultierenden Gummimaterials verbessert. Gleiches gilt auch für die Eigenschaften eines EPR-haltigen Gummimaterials in Abhängigkeit vom Ethylen- bzw. Propylenanteil des verwendeten EPRs.

Das Gummimaterial kann mehrere Gummisorten umfassen. Dabei können von einer Gummisorte zwei oder mehr als zwei Fraktionen enthalten sein, es ist jedoch auch möglich, von mindestens zwei der im Gummimaterial enthaltenen Gummisorten zwei oder mehr Fraktionen vorzusehen. Hierbei wird unter einer Fraktion stets eine der zu Grunde liegenden Gummisorte strukturverwandte oder -identische Substanzportion verstanden.

In einer bevorzugten Ausführungsform ist das Kopfteil 1 aus EPDM, CR oder aus einer Mischung derselben ausgeführt, während der Keil 3 bzw. die Wischlippe 4 aus BR gefertigt sind. Vorzugsweise wird der Keil 3 bzw. die Wischlippe 4 aus einer Mischung von mindestens zwei verschiedenen BR-Fraktionen ausgebildet, die sich beispielsweise hinsichtlich ihrer Seitenketten bzw. ihrer cis-/trans-Abfolge unterscheiden.

Das Gummimaterial enthält weiterhin ein Homogenisierungsmittel, das eine bessere Durchmischbarkeit der verschiedenen Gummisorten bzw. -fraktionen im Rohgummimaterial gewährleistet. Gleichzeitig führt es zu einer Stabilisierung des gesamten Rohgummimaterials als Dispersion von Füll- und Hilfsstoffen in der Rohgummimasse. Als Homogenisierungsmittel werden beispielsweise aromatische oder aliphatische Harze eingesetzt.

Das Gummimaterial enthält weiterhin mindestens einen Füllstoff. Der Füllstoff umfasst vorzugsweise Ruß. Als Ruß wird beispielsweise sogenannter Ofenruß eingesetzt. Es hat sich jedoch als vorteilhaft erwiesen, als Füllstoff eine Mischung von Ofenruß und Thermalruß einzusetzen. Während Ofenruß im allgemeinen eine relativ feine Körnung aufweist und bei hohen Füllgraden zu einem zwar abriebfesten, jedoch relativ harten Gummimaterial führt, weist Thermalruß eine grobe Körnung auf, die auch bei hohen Füllgraden nur zu einer geringen Zunahme der Härte des Gummimaterials führt.

Ein besonders hoher Füllgrad kann erreicht werden, wenn dem Gummimaterial zusätzlich ein Weichmacher zugesetzt wird, da so der mit steigenden Füllstoffgehalten zunehmenden Versprödung des Gummimaterials effektiv entgegengewirkt werden kann. Als Weichmacher eignen sich beispielsweise synthetische Weichmacher sowie Mineralöl.

Üblicherweise werden bei der Herstellung von Gummimaterialien dem Rohgummimaterial Trocknungsmittel zugesetzt. Bei Verzicht auf derartige Trocknungsmittel führt die in den Ausgangsstoffen enthaltene Feuchtigkeit während der Extrusion oder Vulkanisation zu einer porösen Oberfläche eines auf diese Weise erzeugten Gummiprofils. Ein gängiges Trocknungsmittel, das bei Gummimaterialien zur Anwendung kommt, ist beispielsweise Kalziumoxid. Dieses bildet bei Kontakt mit der im Gummimaterial enthaltenen Feuchtigkeit Kalziumhydroxid. Bei Verwendung von Kalziumoxid können jedoch Probleme entstehen, wenn es zu einer Kristallbildung des resultierenden Kalziumhydroxids kommt.

Aus diesem Grund erfolgt die Herstellung des vorliegenden Gummimaterials vorzugsweise ohne einen Zusatz von Kalziumoxid. Um dennoch eine ausreichend gute Oberflächengüte der erzeugten Profile zu erreichen, wird zum einen der Feuchtigkeitsgehalt der zur Erzeugung des Gummimaterials benötigten Ausgangsmaterialien überprüft und diese gegebenenfalls separat unter Feuchtigkeitsausschluss gelagert. Weiterhin wird die Vulkanisation des Rohgummimaterials mit einer möglichst kurzen Reaktionszeit durchgeführt. Hierfür eignet sich insbesondere ein auf Peroxiden beruhendes Vulkanisationssystem.

Exemplarisch ist im folgenden ein Ausführungsbeispiel eines Gummimaterials bzw. dessen Zusammensetzung bezogen jeweils auf 100 Gewichtsteile an Elastomer (phr) aufgeführt.

| Substanz | Gehalt in phr Rezeptur 1 | Gehalt in phr Rezeptur 2 |
|---|---|---|
| EPDM 1 | 0.5 - 100 | - |
| EPDM 2 | 0.5 - 100 | - |
| EPR 1 | - | 0.5 - 100 |
| EPR 2 | - | 0.5 - 100 |
| NR, IR, BR, SBR oder CR | 0 - 10 | 0 - 70 |
| Homogenisierungsmittel | 0 - 10 | 0 - 10 |
| Ofenruß | 20 - 120 | 20 - 120 |
| Thermalruß | 20 - 120 | 20 - 120 |
| Peroxid | 0 - 10 | 0.5 - 10 |
| Schwefel | 0 - 1 | - |
| Hilfsstoffe + Weichmacher | 20 - 105 | 20 - 105 |

Die Herstellung des Gummimaterials erfolgt, indem zunächst eine oder mehrere Gummisorten bzw. eine oder mehrere Fraktionen der betreffenden Gummisorte mit dem oder den Füllstoffen, dem Homogenisierungsmittel und weiteren Verarbeitungshilfsstoffen einem Extruder zugeführt werden und dort eine intensive Vermischung erfahren. Alternativ können die Ausgangsmaterialien auch einem Mischer zugeführt, dort vermischt und beispielsweise formgepresst werden oder einem Spritzgussverfahren unterzogen werden.

Auf diese Weise wird ein Profilstrang erzeugt, wobei dieser bei der Herstellung von Wischleisten für Scheibenwischer die Form eines Doppelstranges hat, bei dem zwei Wischgummi-Einzelstränge im Bereich der Wischlippe in Längsrichtung des Doppelstranges miteinander verbunden sind. Der erzeugte Doppelstrang wird zur Vulkanisation beispielsweise einem Salzbad oder einem Ofen zugeführt und dort bei einer Temperatur von ca. 220°C vulkanisiert. In einem weiteren Schritt erfolgt bei Bedarf eine Oberflächenmodifizierung beispielsweise durch Grafitieren, Halogenieren, Lackieren oder Beschichten. Abschließend wird das vulkanisierte Elastomerprofil in Längs- bzw. Querrichtung geschnitten.

Alternativ ist es möglich, gezielt nur bestimmte Oberflächenpartien eines Wischblattes zu modifizieren. So kann durch geeignete Prozessführung bei gezieltem Abdecken nicht zu modifizierender Bereiche des Wischblatts beispielsweise lediglich die in Kontakt mit der zu reinigenden Oberfläche stehende Wischlippe modifiziert werden oder zusätzlich bzw. alternativ eine Führungsnut des Wischblattes, mit der das Wischblatt in eine entsprechende Wischblatthalterung eingeführt werden kann.

## Patentansprüche

1. Wischblatt eines Scheibenwischers, enthaltend ein Gummimaterial, das zumindest eine Gummisorte, mindestens einen Füllstoff sowie Verarbeitungshilfsstoffe umfasst, **dadurch gekennzeichnet, dass** das Gummimaterial zumindest von EPDM als Gummisorte eine erste und eine zweite Fraktion aufweist, die sich im unvulkanisierten Zustand hinsichtlich ihrer Viskosität unterscheiden, wobei eine erste EPDM-Fraktion mit einer ersten Viskosität von 20 - 50 Mooney bei 125°C enthalten ist und eine zweite EPDM-Fraktion mit einer zweiten Viskosität von 50 bis 95 Mooney bei 125°C.

2. Wischblatt nach Anspruch 1, **dadurch gekennzeichnet, dass** die Gummisorte EPDM, EPR, BR, IR, SBR oder CR ist.

3. Wischblatt nach einem der vorhergehenden Ansprüche, **dadurch gekennzeichnet, dass** ein Homogenisierungsmittel enthalten ist.

4. Wischblatt nach einem der vorhergehenden Ansprüche, **dadurch gekennzeichnet, dass** der Füllstoff Ruß enthält.

5. Wischblatt nach Anspruch 4, **dadurch gekennzeichnet, dass** der Füllstoff eine Mischung aus Ofenruß und Thermalruß enthält.

6. Wischblatt nach einem der vorhergehenden Ansprüche, **dadurch gekennzeichnet, dass** das Gummimaterial 40 - 320 Gewichtsteile des Füllstoffs bezogen auf 100 Gewichtsteile an Elastomeranteil enthält.

7. Wischblatt nach einem der vorhergehenden Ansprüche, **dadurch gekennzeichnet, dass** das Gummimaterial im wesentlichen frei von Kalziumoxid oder Kalziumhydroxid ist.

8. Wischblatt nach einem der vorhergehenden Ansprüche, **dadurch gekennzeichnet, dass** das Gummimaterial im wesentlichen frei von Zinkoxid ist.

9. Verfahren zur Herstellung eines Wischblatts gemäß einem der Ansprüche 1 bis 8, **dadurch gekennzeichnet, dass** eine erste EPDM-Fraktion mit einer ersten Viskosität von 20 - 50 Mooney bei 125°C und eine zweite EPDM-Fraktion mit einer zweiten Viskosität von 50 - 95 Mooney bei 125°C zu einer Mischung mit einer mittleren dritten Viskosität gemischt werden, und dass die Mischung in einem weiteren Schritt extrudiert, gespritzt oder formgepresst wird.

10. Verfahren nach Anspruch 9, **dadurch gekennzeichnet, dass** der Anteil der ersten Fraktion und der Anteil der zweiten Fraktion an der Mischung so gewählt wird, dass die Mischung eine Mooney-Viskosität von 30 - 60 Mooney aufweist.

11. Wischblatt für Scheibenwischer, **gekennzeichnet durch** einen Wischgummi, der ein Gummimaterial gemäß einem der Ansprüche 1 bis 8 enthält.

12. Wischblatt gemäß Anspruch 11, **dadurch gekennzeichnet, dass** ein Kopfteil (1) und/oder ein Steg (2) des Wischblatts aus EPDM und/oder CR ausgeführt ist, und dass ein Wischlippe (4) des Wischblatts aus BR ausgeführt ist.

## Claims

1. Wiper blade of a screen wiper, comprising a rubber material which encompasses at least one type of rubber, at least one filler and also processing aids, **characterized in that** the rubber material has, at least of the EPDM type of rubber, a first and a second fraction whose viscosities differ in the unvulcanized state, where a first EPDM fraction is present with a first viscosity of from 20 - 50 Mooney at 125°C and a second EPDM fraction with a second viscosity of from 50 to 95 Mooney at 125°C.

2. Wiper blade according to Claim 1, **characterized in that** the type of rubber is EPDM, EPR, BR, IR, SBR or CR.

3. Wiper blade according to any of the preceding claims, **characterized in that** a homogenizer is present.

4. Wiper blade according to any of the preceding claims, **characterized in that** the filler is carbon black.

5. Wiper blade according to Claim 4, **characterized in that** the filler comprises a mixture of furnace black and thermal black.

6. Wiper blade according to any of the preceding claims, **characterized in that** the rubber material comprises from 40 to 320 parts by weight of the filler, based on 100 parts by weight of elastomer content.

7. Wiper blade according to any of the preceding claims, **characterized in that** the rubber material is in essence free from calcium oxide or calcium hydroxide.

8. Wiper blade according to any of the preceding claims, **characterized in that** the rubber material is in essence free from zinc oxide.

9. Process for production of a wiper blade according to any of Claims 1 to 8, **characterized in that** a first EPDM fraction with a first viscosity of from 20 to 50 Mooney at 125°C and a second EPDM fraction with a second viscosity of from 50 to 95 Mooney at 125°C are mixed to give a mixture with an average third viscosity, and that, in a further step, the mixture is extruded, injection moulded or compression moulded.

10. Process according to Claim 9, **characterized in that** the content of the first fraction and the content of the second fraction, based on the mixture are selected in such a way that the mixture has a Mooney viscosity of from 30 to 60 Mooney.

11. Wiper blade for screen wiper, **characterized by** a wiper rubber which comprises a rubber material according to any of Claims 1 to 8.

12. Wiper blade according to Claim 11, **characterized in that** a stock (1) and/or a web (2) of the wiper blade has been designed from EPDM and/or CR, and **in that** a wiper lip (4) of the wiper blade has been designed from BR.

## Revendications

1. Balai d'essuie-glace avec un caoutchouc comprenant au moins une sorte de caoutchouc contenant au moins une charge et des agents de traitement,
**caractérisé en ce que**
le caoutchouc comporte comme sorte de caoutchouc EPDM au moins une première et une seconde fraction qui se distinguent par leur viscosité à l'état non vulcanisé,
la première fraction de caoutchouc EPDM ayant une première viscosité de 20-50 Mooney pour une température de 125°C et la seconde fraction de caoutchouc EPDM ayant une seconde viscosité de 50-95 Mooney pour une température de 125°C.

2. Balai d'essuie-glace selon la revendication 1,
**caractérisé en ce que**
la sorte de caoutchouc est EPDM, EPR, BR, IR, SBR ou CR.

3. Balai d'essuie-glace selon l'une des revendications précédentes,
**caractérisé en ce qu'**
il contient un agent d'homogénéisation.

4. Balai d'essuie-glace selon l'une des revendications précédentes,
**caractérisé en ce que**
la charge est du noir de fumées.

5. Balai d'essuie-glace selon la revendication 4,
**caractérisé en ce que**
la charge est un mélange de noir de fumées de four et de noir de fumées thermique.

6. Balai d'essuie-glace selon l'une des revendications précédentes,
**caractérisé en ce que**
le caoutchouc contient entre 40 et 320 parties en poids de charge pour 100 parties en poids d'élastomère.

7. Balai d'essuie-glace selon l'une quelconque des revendications précédentes,
**caractérisé en ce que**
le caoutchouc ne contient pratiquement pas d'oxyde de calcium ou d'hydroxyde de calcium.

8. Balai d'essuie-glace selon l'une quelconque des revendications précédentes,
**caractérisé en ce que**
le caoutchouc est pratiquement sans oxyde de zinc.

9. Procédé de fabrication d'un balai d'essuie-glace selon l'une des revendications 1 à 8,
**caractérisé en ce qu'**
on mélange une première fraction de caoutchouc EPDM ayant une première viscosité de 20-50 Mooney à 125°C et une seconde fraction de caoutchouc EPDM ayant une seconde viscosité de 50-95 Mooney pour une température de 125°C à un mélange ayant une troisième viscosité moyenne et au cours d'une autre étape on extrude, on injecte ou on presse le mélange dans un moule.

10. Procédé de fabrication d'un balai d'essuie-glace selon la revendication 9,
**caractérisé en ce que**
la teneur correspondant à la première fraction et celle correspondant à la seconde fraction dans le mélange sont choisies pour que le mélange présente une viscosité Mooney comprise entre 30 et 60 Mooney.

11. Balai d'essuie-glace,
**caractérisé en ce qu'**
il comporte une lame en un caoutchouc selon l'une des revendications 1 à 8.

12. Balai d'essuie-glace selon la revendication 11,
**caractérisé en ce que**
la tête (1) et/ou l'entretoise (2) du balai d'essuie-glace est réalisée en caoutchouc EPDM et/ou en caoutchouc CR et la lèvre d'essuyage (4) du balai est en caoutchouc BR.
